# EUROPEAN PATENT SPECIFICATION

(11) **EP 2 470 590 B1**
(45) Date of publication and mention of the grant of the patent: **23.08.2017**
(21) Application number: 10740800.7
(22) Date of filing: 28.07.2010
(51) Int. Cl.: C08J 9/00, C08J 9/12, C08L 25/06

(54) **MONOMODAL EXTRUDED POLYSTYRENE FOAM**
MONOMODALER EXTRUDIERTER POLYSTYROLSCHAUM
MOUSSE MONOMODALE DE POLYSTYRÈNE EXTRUDÉ

(30) Priority: 28.08.2009 US 237717 P
(43) Date of publication of application: 04.07.2012
(73) Proprietor: Dow Global Technologies LLC, Midland, MI 48674 (US)
(72) Inventor: STOBBY, William, Midland, MI 48640 (US)
(74) Representative: Beck Greener
(86) International application number: PCT/US2010/043461
(87) International publication number: WO 2011/031385

(56) References cited:
- WO-A1-03/059997
- US-A1- 2003 130 364

## Description

### CROSS REFERENCE STATEMENT

This application claims the benefit of U.S. Provisional Application No. 61/237,717, filed August 28, 2009

### BACKGROUND OF THE INVENTION

### Field of the Invention

The present invention relates to extruded polystyrene foam having a monomodal cell size distribution and its method of manufacture.

### Description of Related Art

It is desirable to prepare extruded polystyrene foam using environmentally blowing agents including water and carbon dioxide. However, both water and carbon dioxide are difficult to incorporate into polystyrene during an extruded foam process. Water in particular has been difficult to incorporate into a polystyrene melt during extrusion foaming due to water's low solubility in polystyrene.

Extruded polystyrene art includes numerous methods for facilitating use of water as a blowing agent in forming extruded polystyrene foam. For example, United States patent (USP) 5475035 describes cooling a polymer melt prior to introducing water. USP 4559367 describes blending water-containing organic vegetable matter into a polymer melt to introduce water into the polymer melt for foaming. Use of absorbent clays in a polymer melt is also a known means for enhancing dispersion of water in a polystyrene melt since the water will absorb into the clay particles (*see, for example,* US patent applications 2002/0198272, 2003/0130364, and 2007/0179205).

One characteristic often associated with extruded polystyrene foam prepared using water as a blowing agent is formation of a bimodal cell size structure *(see, for example,* USP 4559367, US patent applications 2002/0198272, 2003/0130364, and 2007/0179205). Bimodal foam structures were once desirable as possibly offering enhanced thermal insulating ability. However, bimodal structures are more difficult to produce in a controlled manner when high levels of highly nucleating blowing agents such as hydrofluoro-hydrocarbons (*for example,* HFC-134a) and CO₂ are used and/or when foamable polymer composition (polymer gel) temperatures are greater than 220°C.

Using water as a blowing agent in preparing extruded polymeric foam also introduces chemical challenges in preparing extruded polystyrene foam. Water can dissolve salts and serve as a transport medium for salts in a foamable polystyrene melt to facilitate salt build-up on an extrusion die lip, which has been associated with causing poor skin quality in extruded foam as the salts gouge into the surface of the foam during extrusion (*see, for example,* US patent application 2008/0293839). The presence of cations in a formable polymer composition and in foam is generally undesirable because they can complex with anions present to form the undesirable salts that build-up on the die lip. Surprisingly, however, barium cations are not problematic in causing die lip build-up.

It is desirable to advance the art of extruded polystyrene foam by finding a way to prepare extruded polystyrene foam using a blowing agent composition that contains water, preferably water and carbon dioxide, and that has a monomodal cell size distribution and minimal blow-holes. It is particularly desirable to prepare such foam that has an average 3-directional cell size of at least 0.10 millimeters and a density of 40 kilograms per cubic meter or less. It is also desirable to prepare polystyrene foam using a foamable gel composition that is low in water extractable salts, particularly 50 or fewer weight parts of cations other than barium cations per million weight parts of polymer.

### BRIEF SUMMARY OF THE INVENTION

The present invention advances the state of extruded polystyrene foam art by solving the problems necessary to provide polystyrene foam having a monomodal cell size distribution and minimal blow-holes using a blowing agent composition that contains water. The blowing agent composition can further contain carbon dioxide. The polystyrene foam can have an average 3-directional cell size of at least 0.10 millimeters and a density of 40 kilograms per cubic meter or less and desirably contains 50 or fewer weight parts of cations other than barium per million weight parts of polymer (ppm). The polystyrene foam preferably has an average 3-directional cell size of at least 0.15 millimeters.

The present invention results from surprisingly discovering certain absorbent clays that facilitate use of water as a blowing agent in forming extruded polystyrene foam without inducing bimodal cell formation and that produce surprisingly few cations, which can contribute to water soluble salts that cause die lip build-up to any noticeable extent. As a result, including these particular clays facilitate inclusion of water as a blowing agent without resulting in significant numbers of blow-holes or damaging the surface quality of extruded polymer foam. The particular absorbent clays are halloysite clays.

The present invention is an extruded polystyrene foam article comprising: (a) a polystyrene homopolymer matrix that defines cells; and (b) halloysite clay particles dispersed in the polystyrene matrix at a concentration of greater than 0.01 weight-percent and five weight percent or less based 100 weight parts of total polymer in the polymer matrix; wherein the polystyrene foam has a monomodal cell size distribution and contains 50 ppm or less total cations other than barium.

The process described herein is useful for producing extruded polystyrene foam of the present invention. The extruded polystyrene foam of the present invention is useful anywhere polystyrene foam is useful including thermal insulation applications as well as arts and crafts applications.

### DETAILED DESCRIPTION OF THE INVENTION

### Terms

Length, width, thickness. Extruded polymer foam articles typically have three mutually orthogonal dimensions: length, width and thickness. Length is a dimension equal to that of the greatest magnitude and generally extends in the direction the article was extruded. Width is equal to or greater in magnitude than the thickness.

Primary surface. A primary surface of an article has a planar surface area equal to the largest planar surface area of any surface of the article. Typically, length and width dimensions of foam define a primary surface of the foam. Planar surface area refers to the area of a surface projected onto a plane to eliminate surface texture contributions to surface area.

Three-directional cell size. A three-directional cell size is the average of a cell size in the length, width and thickness dimensions of foam in which the cell is defined. Determine cell size in any given dimension according to ASTM method D3576.

Monomodal cell size distribution. A foam has a "monomodal cell size distribution" if a plot of number of cells versus cell size (rounded to nearest 0.05 millimeters) reveals one peak. In contrast, foam having a multimodal cell size distribution reveals more than one peak in a similar plot. Measure at least 100 cells from a cut foam surface to create a plot for determining whether foam is monomodal or multimodal. A peak occurs in such a plot at a given cell size if the population remains unchanged or continues to decrease for two immediately smaller and two immediately larger cell sizes adjacent to the given cell size.

Blow-hole. A blow-hole is also known as a "pinhole" in literature and refers to a defect in a cellular foam structure in the form of a spurious void that is multiple cell diameters in size. Blow-holes can rupture through a foam surface to create a crater on the surface. Blow-holes can also remain hidden beneath a surface of foam and are revealed upon cutting the foam. Blow-holes are undesirable and can cause structural weakness in a foam and increase thermal conductivity through foam.

Parts per hundred, or "pph", refers to weight-parts per hundred weight parts of polymer in polymeric foam unless otherwise indicated.

Parts per million, or "ppm", refers to weight-parts per million weight-parts of polymer in polymeric foam unless otherwise indicated.

ASTM refers to American Society for Testing and Materials and identifies standard test methods by number. Herein, test methods correspond to the method of the year identified as a hyphenated suffix to the test number or, in an absence of such a suffix, the most recent test method prior to the priority date of this document.

"And/or" means "and, or as an alternative". "Multiple" means two or more. All ranges include endpoints unless otherwise noted.

### Process

The process described herein is an extrusion foam process for preparing an extruded polystyrene foam article. To carry out an extrusion foam process, provide a foamable polymer composition comprising a blowing agent and a continuous thermoplastic polymer phase in an extruder at an initial pressure and temperature. The initial temperature is above the softening temperature of the continuous thermoplastic polymer phase.

Softening temperature is the glass transition temperature (Tg) of an amorphous polymer or highest Tg represented in a blend of multiple amorphous polymers, melting temperature (Tm) of a semi-crystalline polymer or highest Tm in a blend of multiple semi-crystalline polymers. If the continuous thermoplastic polymer phase has both amorphous and semi-crystalline polymers that are continuous (as opposed to one dispersed in another) then the softening temperature is the higher of the highest Tm for the continuous semi-crystalline polymer(s) and highest Tg for the continuous amorphous polymer(s).

The initial pressure is sufficiently high to preclude expansion of the blowing agent within the foamable polymer composition. Hence, the initial pressure is sufficiently high to preclude foaming and will depend on types and concentration of blowing agents present. Initial pressures are readily and routinely determined by artisans with little experimentation.

Extrude the foamable polymer composition through a foaming die at a foaming temperature into an environment having a pressure lower than the initial pressure and low enough to allow foaming of the foamable polymer composition The foaming temperature is desirably lower than the initial temperature. Allow the foamable polymer composition to expand into polymer foam, typically as it cools to form stable thermoplastic polymer foam.

The foamable polymer composition of the described process is a foamable polystyrene composition, which means the continuous thermoplastic polymer phase comprises polystyrene homopolymer as a continuous polymer. Polystyrene homopolymer typically is 50 weight-percent (wt%) or more, preferably 70 wt% or more and can be 80 wt% or more, 90 wt% or more and even 100 wt% of the continuous thermoplastic polymers in the thermoplastic polymer continuous phase by weight of all continuous thermoplastic polymers.

The blowing agent in the foamable polymer composition comprises water. Water is typically present at a concentration of 0.5 or more weight parts per hundred weight parts of polymer (pph), preferably one pph or more and can be present at a concentration of 1.5 pph or more and even two pph or more. More water is desirable as an environmentally blowing agent in the foamable polymer composition. Typically, water is present at a concentration of three wt% or less in order to minimize blow-holes in the foam and to maintain dimensional stability for low density closed cell foams by avoiding excessive expansion of during foaming.

In one desirable embodiment, the blowing agent also comprises carbon dioxide. Desirably, the amount of carbon dioxide present is 0.5 pph or more, preferably one pph or more and can be two pph or more, three pph or more, even four pph or more. Generally, the amount of carbon dioxide is six pph or less to maintain an average cell size of 0.10 millimeters or greater.

The blowing agent comprising water and, optionally, carbon dioxide can further comprise any other or combination of two or more additional blowing agents. Suitable additional blowing agents include one or more than one of the following: inorganic gases such as argon, nitrogen, and air; organic blowing agents such as aliphatic and cyclic hydrocarbons having from one to nine carbons including methane, ethane, propane, n-butane, isobutane, n-pentane, isopentane, neopentane, cyclobutane, and cyclopentane; fully and partially halogenated alkanes and alkenes having from one to five carbons, preferably that are chlorine-free (*e.g.,* difluoromethane (HFC-32), perfluoromethane, ethyl fluoride (HFC-161), 1,1,-difluoroethane (HFC-152a), 1,1,1-trifluoroethane (HFC-143a), 1,1,2,2-tetrafluoroethane (HFC-134), 1,1,1,2 tetrafluoroethane (HFC-134a), pentafluoroethane (HFC-125), perfluoroethane, 2,2-difluoropropane (HFC-272fb), 1,1,1-trifluoropropane (HFC-263fb), 1,1,1,2,3,3,3-heptafluoropropane (HFC-227ea), 1,1,1,3,3-pentafluoropropane (HFC-245fa), and 1,1,1,3,3-pentafluorobutane (HFC-365mfc)); fully and partially halogenated polymers and copolymers, desirably fluorinated polymers and copolymers, even more preferably chlorine-free fluorinated polymers and copolymers; aliphatic alcohols having from one to five carbons such as methanol, ethanol, n-propanol, and isopropanol; carbonyl containing compounds such as acetone, 2-butanone, and acetaldehyde; ether containing compounds such as dimethyl ether, diethyl ether, methyl ethyl ether; carboxylate compounds such as methyl formate, methyl acetate, ethyl acetate; carboxylic acid and chemical blowing agents such as azodicarbonamide, azodiisobutyronitrile, benzenesulfo-hydrazide, 4,4-oxybenzene sulfonyl semi-carbazide, p-toluene sulfonyl semi-carbazide, barium azodicarboxylate, N,N'-dimethyl-N,N'-dinitrosoterephthalamide, and trihydrazino triazine.

The foamable polymer composition further comprises halloysite clay particles dispersed throughout the foamable polymer composition. Surprisingly, halloysite clays are uniquely qualified and necessary for the present invention. Halloysite facilitates incorporation of water blowing agent into a foamable polymer composition, yet also results in surprisingly few cations in the foamable polymer composition. Halloysite clays seem to have non-ion exchanging properties that restrict the availability of alkali metal cations that result in die build-up. Therefore, halloysite is ideal for enhancing use of water as a blowing agent without causing poor quality and appearance of an extruded polymer foam due to die build-up of salts.

Clays other than halloysite (*for example*, clays including smectites such as montmorillonite, hectorite, saponite, deidellite and stevensite) have been found to result in multiple factors, even orders of magnitude, more cations than halloysite in a resulting polystyrene foam when used at equal loadings and in the presence of aqueous blowing agents. These cations can result in die build up and poor foam skin quality. Therefore, to put it another way, halloysite surprisingly produces less cations than other clays at equal loading in extruded polymeric foam. In fact, halloysite can produce less than half the amount of cations of other clays at equal loading in extruded polymeric foam. Using halloysite can result in 50 weight-parts per million weight parts polymer (ppm) or fewer, even 30 ppm or fewer cations other than barium in extruded polymeric foam.

The halloysite clay may comprise organic surface treatments or coatings. Organic surface treatments or coatings can be beneficial for improving dispersibility of the clay in a polymer. Suitable materials to serve as organic surface treatments or coatings include dispersants listed in McCutcheon's Volume 2: Functional Materials North America Edition on page 128-148 and coupling agents such as silane and titanate compounds described in Plastic Additive Handbook, R. Gaechter, et al. ed., (1990) Chapter 9.3.5, pages 544-546 Functionalized styrenic copolymers are also suitable organic surface treatment or coating materials and include styrene copolymers with acrylic acid, acrylonitrile, methylmethacrylate, maleic anhydride and methylacrylic ester. Typically, if the halloysite clay contains an organic surface treatment or coating the clay receives the treatment or coating prior to dispersing the clay into the polymer composition for foaming. Notably, the halloysite clay can also be free of an organic surface treatment or coating.

The halloysite clay particles have a mean particle size of 0.1 micrometers (microns) or more, typically one micron or more and can be ten microns or more, even twenty microns or more. Desirably, the halloysite clay particles have a mean particle size of 50 microns or less. Halloysite clay particles having a mean particle size of less than 0.1 microns are acceptable technically but tend to be expensive due to the complexity of grinding to such a small size. Halloysite clay particles having an average size of greater than 50 microns are also technically acceptable, but the large size increases the tendency to rupture cell walls and can reduce the water adsorption efficiency of the clay by reducing the amount of clay surface area per unit weight of clay. Desirably, a 200 mesh screen will retain less than four percent by weight of the halloysite clay after dry sieving the clay. That is, less than 4 wt.% of the halloysite clay has a particle size of greater than 74 micrometers.

Halloysite clay particles are present at a concentration of greater than 0.1 pph, preferably 0.5 pph or more, more preferably one pph or more. Generally the clay particles are present at a concentration of three pph or less. Increasing the clay concentration above three pph can decrease the compressive strength of the resulting foam and cause loss of cell structure integrity and creation of open cells.

The foamable polymer composition can comprise additional additives in addition to halloysite clay particles. Suitable additional additives include infrared attenuating agents (*for example*, carbon black, graphite, metal flake, titanium dioxide); nucleating agents (*for example*, talc and magnesium silicate); flame retardants (*for example,* brominated flame retardants such as hexabromocyclododecane and brominated polymers, phosphorous flame retardants such as triphenylphosphate, and flame retardant packages that may including synergists such as, or example, dicumyl and polycumyl); lubricants (*for example,* calcium stearate and barium stearate); and acid scavengers (*for example,* epoxy resins and organotin stabilizers as described in US patent application 2008/0293839). The total amount of additional additives is typically 15 pph or less.

As the foamable polymer composition expands upon extrusion, it expands into a polymeric foam article of the present invention. The foamable polymer composition expands into an extruded polystyrene foam article having a monomodal cell size distribution and surprisingly few blow-holes. Typically, the extruded polystyrene foam article has a cross section with fewer than ten blow-holes per square centimeter (*see* footnote d of Table 2 for how to measure blow-holes).

Desirably, the foamable polymer composition expands into an extruded polystyrene polymer foam article having an average three-directional cell size of at least 0.10 millimeters and, typically two millimeters or less. The extruded polystyrene foam article desirably has a density of 40 kilograms per cubic meter (kg/m³) or less, preferably 38 kg/m³ or less, still more preferably 35 kg/m³ or less and yet more preferably 32 kg/m³ or less. Generally, expansion occurs so as to produce an extruded polystyrene polymer foam article having a density of 18 kg/m³ or more.

### Extruded Polystyrene Foam Article

The extruded polystyrene foam article of the present invention comprises a polystyrene matrix that defines multiple cells. The polystyrene matrix has a continuous thermoplastic polymer phase that contains polystyrene homopolymer. Desirably, polystyrene homopolymer is 50 wt% or more, preferably 70 wt% or more and can be 80 wt% or more, 90 wt% or more and even 100 wt% of the continuous thermoplastic polymers in the polystyrene matrix.

The cells of the extruded polystyrene foam article define a monomodal cell size distribution (*that is*, the extruded polystyrene foam has a monomodal cell size distribution). Desirably, the extruded polystyrene foam has an average three-directional cell size of at least 0.10 millimeters and typically two millimeters or less.

The extruded polystyrene foam article comprises halloysite clay particles dispersed within the polystyrene matrix. The halloysite clay particles are as described for the foamable polymer composition.

As with the foamable polymer composition, halloysite clay particles are present at a concentration of greater than 0.1 pph, preferably 0.5 pph or more, more preferably two pph or more and can be five pph or more. Generally the clay particles are present at a concentration of five pph or less.

As with the foamable polymer composition, additional additives can also be present in the extruded polystyrene foam article. Suitable additional additives and suitable concentrations are as already identified for the foamable polymer composition.

The extruded polystyrene foam article desirably has a density of 40 kilograms per cubic meter (kg/m³) or less, preferably 38 kg/m³ or less, still more preferably 35 kg/m³ or less and yet more preferably 32 kg/m³ or less. Generally, the density is 18 kg/m³ or more in order to achieve mechanical integrity.

Typically, the extruded polystyrene foam article has a cross section with fewer than ten blow-holes per square centimeter (*see* footnote d of Table 2 for how to measure blow-holes).

The extruded polystyrene foam article desirably has a primary surface, preferably has every surface, that is free from defects visible by an unaided eye, the defects being in a form of lines, cuts, fractures and blow-holes that rupture through the surface.

### Examples

The following examples serve to illustrate specific embodiments of the present invention.

Determine the concentration of water soluble cations in the foam samples of the examples and comparative examples using inductively coupled plasma emission spectroscopy. Extract water soluble material from 0.2-0.3 grams of foam sample by dissolving the sample in 20 milliliters of methylene chloride, add 20 milliliters of deionized water, mechanically shake for 20 minutes and allow layers organic and aqueous layers to separate. Remove an aliquot of the aqueous layer by filtering through a 0.45 micrometer syringe filter. Prepare the aliquot for metal ion analysis by spiking a 4.75 milliliter portion of the aliquot with 0.25 milliliters of concentrated nitric acid. Analyze the spiked portion using inductively coupled plasma emission spectroscopy (ICP-AES).

Use a PerkinElmer Optima 4300 DV ICP-AES in an axial viewing mode for analysis. Introduce a sample for analysis using a peristaltic pump and a cross-flow nebulizer with a concentric spray chamber. The typical operating conditions are as follows:

| **Plasma Parameters** | |
|---|---|
| Plasma Gas | Argon |
| Incident Power (Watts) | 1300 |
| Above Load Coil (mm) | 15 |
| Plasma Gas (L/min.) | 15 |
| Coolant Gas (L/min.) | 0.5 |
| Nebulizer Gas (L/min.) | 0.8 |
| Source Equilibration Delay (sec.) | 15 |
| Plasma Aerosol Type | Wet |
| Nebulizer Start-up Conditions | Gradual |

| **Peristaltic Pump Parameters** | |
|---|---|
| Sample Flow Rate (mL/min.) | 1.0 |
| Sample Flush Time (sec.) | 60 |
| Wash Frequency | Between samples |
| Wash Rate (mL/min.) | 1.0 |
| Wash Time | 60 |

| **Instrument Parameters** | |
|---|---|
| Resolution (setting) | Normal |
| Read Delay Time (sec.) | 35 |
| Read Time | Auto |
| Read Time Min. (sec.) | 5 |
| Read Time Max. (sec.) | 20 |
| Algorithm | Peak Area: 3 pts/peak |
| Calibration Equation | Linear, Calc. Intensity |
| Integrations | 3 |

Calibrate the ICP-AES using a three point linear calibration using multi-element and mineral standards ranging from 0.25, 1.0, and five micrograms per milliliter standard concentrations as well as a 5% nitric acid blank. Verify the accuracy of the standards against a certified reference material (APG 4072).

### Example 1 and Comparative Examples A-E: Clays and Ions

Example (Ex) 1 and comparative examples (Comp Exs) A-E illustrate that halloysite clays produce surprisingly fewer cations than other clays in an extruded polymeric foam when employing an aqueous blowing agent and brominated flame retardant.

Prepare Ex 1 and Comp Exs A-E using an extrusion foam process that includes an extruder having a feed throat, a blowing agent mixer section and a foaming die at the extruder discharge.

Provide the following components at the following ratios to the feed throat of the extruder: 100 weight-parts polystyrene homopolymer (STYRON® F168, STYRON is a trademark of The Dow Chemical Company), 0.2 weight-parts barium stearate, 0.3 weight-parts polyethylene (AFFINITY® PE2247, AFFINITY is a trademark of The Dow Chemical Company) and 0.9 weight-parts of a flame retardant package containing 88 wt% hexabromocyclododecane and 12 wt% cresol novolak epoxy resin (Araldite™ ECN1280, Araldite is a trademark of Huntsman Advanced Materials Americas Inc.). Further feed 1.6 weight-parts of a clay additive (*see* Table 1 for identity of the clay) directly into the extruder feed throat. The extruder blends these components together at an initial temperature of 205 °C to form a polymer gel.

**Table 1**

| **Sample** | **Clay** | **Source** |
|---|---|---|
| Ex 1 | Halloysite | "Dow Clay" from Plainsman Clays Limited |
| Comp Ex A | Bentonite (smectite) | Bentonite ASAMA from Hojan Co. Ltd, Japan |
| Comp Ex B | Sodium fluoromica (smectite) | "Somasif ME100" from Co-OP Chemical Co. |
| Comp Ex C | Saponite (smectite) | "200 mesh Saponite" form IMV Nevada |
| Comp Ex D | Sepiolite (homite) | "IGS" from IMV Nevada |
| Comp Ex E | Attapulgite (homite) | "ATTAGEL 20" from Engelhard Corp. |

Each clay has a sufficiently small particle size such that less than four percent by weight of the clay is retained on a 200 mesh screen upon dry sieving the clay. That is, less than 4 wt.% of the clay has a particle size of greater than 74 micrometers. The polymer gel proceeds through the extruder to the blowing agent mixer section where a blowing agent is injected into the polymer gel at an initial pressure of 14.5 mega Pascals (2100 pounds per square inch (14480 kPa)). The blowing agent consists of 7.5 weight-parts 1,1,1,2-tetrafluoroethane (HFC-134a), 1.0 weight-parts carbon dioxide, and 1.25 weight-parts water with weight-parts relative to 100 weight-parts polystyrene. Mix the blowing agent into the polymer gel to form a foamable polymer composition.

Cool the foamable polymer composition to 130 °C and extrude the foamable polymer composition through an adjustable slit extrusion die at a pressure of 6.55 mega Pascals (950 pounds per square inch (6550 kPa)) into ambient temperature (approximately 25 °C) and atmospheric pressure (760 mm of mercury (0.1 MPa)) and allow the foamable polymer composition to expand into polymeric foam. Table 2 provides characteristics of the resulting foams. In addition to these characteristics, each of the foams has a monomodal cell size distribution.

**Table 2**

| **Sample** | **Water soluble Na^{a}** | **Water soluble Ca^{a}** | **Water soluble Mg^{a}** | **Density w/skin^{b}** | **Density w/o skin^{c}** | **Ave 3-directional cell size** | **Number of Blow-holes^{d}** |
|---|---|---|---|---|---|---|---|
| | (ppm) | (ppm) | (ppm) | (kg/m³) | (kg/m³) | (mm) | |
| Ex 1 *(halloysite)* | <10 | 11 | <10 | 36.5 | 31.1 | 0.13 | 6 |
| Comp Ex A *(smectite*/*bentonite)* | 74 | 77 | <10 | 34.7 | 31.4 | 0.14 | 3 |
| Comp Ex B *(smectite*/*fluoromica)* | 120 | <10 | 30 | 34.2 | 32.1 | 0.14 | 1 |
| Comp Ex C *(smectite*/*saponite)* | 180 | 35 | 44 | 34.8 | 31.6 | 0.16 | 4 |
| Comp Ex D *(homite*/*sepiolite)* | 22 | 220 | 44 | 36.8 | 32.7 | 0.094 | 7 |
| Comp Ex E (*homite*/*attapulgite*) | <10 | 49 | 31 | 35.6 | 31.4 | 0.11 | 6 |

| | | | | | | | |
|---|---|---|---|---|---|---|---|
| ^{a} Water soluble sodium (Na), Calcium (Ca) and Magnesium (Mg) is reported in weight parts per million weight parts of polymer (ppm). ^{b} Measure foam density with skin according to test method ASTM D3575-93 suffix W and method A. ^{c} Measure foam density without skin as in method with skin but after skiving off the top 2.5 millimeters from a primary surface of the foam and a surface opposing the primary surface of the foam using, for example, a meat slicer. ^{d} Measure the number of blow-holes in a foam sample by cutting a 0.5 millimeter thick cross sectional slice perpendicular to a primary surface of the foam sample using a meat slicer, placing the slice on a light box and counting the number of light bright spots in a one-centimeter diameter spot centered on the slice. The bright spots exceed multiple cells in size and stand out in appearance from the general foam. The bright spots are blow-holes. Measure the number of blow-holes on three different cross sectional slices spaced apart by 0.67 meters along a primary surface. Average the number of blow-holes from the three samples to identify the number of blow-holes for the foam. | | | | | | | |

This Ex and Comp Exs illustrate the advantage halloysite clays have over other clays by producing fewer ions during the foaming process. The halloysite clay sample nearly reveals undetectable amounts of water soluble cations other than barium and less than 30 ppm of cations other than barium. The homite/attapulgite is next best with at least 80 ppm cations other than barium- over twice as many non-barium cations as the halloysite example. Fewer non-barium cations is beneficial for preparing high quality foam surfaces because build of water soluble salts on the foaming die, which tends to gouge surfaces of foamable polymer composition as it is extruded, is less with less ions *(see, for example,* United States patent application 2008/0293839 for discussion of salt build up on a foaming die and its impact on foam quality).

### Example 2 and Comparative Example F: Clays and Foam Quality

Prepare Ex 2 and Comp Ex F using an extrusion foam process that, like the previous Ex and Comp Exs, includes an extruder having a feed throat, a blowing agent mixer section and a foaming die at the extruder discharge.

### Comparative Example F

Provide the following components at the following ratios to the feed throat of the extruder: 100 weight-parts polystyrene homopolymer (STYRON® F168, STYRON is a trademark of The Dow Chemical Company), 0.2 weight-parts barium stearate, 0.3 weight-parts polyethylene (AFFINITY® PE2247, AFFINITY is a trademark of The Dow Chemical Company) and 0.9 weight-parts of a flame retardant package containing 88 wt% hexabromocyclododecane and 12 wt% cresol novolak epoxy resin (Araldite™ ECN1280, Araldite is a trademark of Huntsman Advanced Materials Americas Inc.). The extruder blends these components together at an initial temperature of 205 °C to form a polymer gel.

The polymer gel proceeds through the extruder to the blowing agent mixer section where a blowing agent is injected into the polymer gel at an initial pressure of 14.5 mega Pascals (2100 pounds per square inch (14480 kPa)). The blowing agent consists of 7.5 weight-parts 1,1,1,2-tetrafluoroethane (HFC-134a), 1.0 weight-parts carbon dioxide, and 0.5 weight-parts water with weight-parts relative to 100 weight-parts polystyrene. Mix the blowing agent into the polymer gel to form a foamable polymer composition.

Cool the foamable polymer composition to 130°C and extrude the foamable polymer composition through an adjustable slit extrusion die at a pressure of 6.55 mega Pascals (950 pounds per square inch (6550 kPa)) into ambient temperature (approximately 25°C) and atmospheric pressure (760 mm of mercury (0.1 MPa) and allow the foamable polymer composition to expand into polymeric foam (Comp Ex F).

### Example 2

Prepare Ex 2 using similar processing conditions as Comp Ex F. Change the formulation in the following manner: increase the water concentration to 1.25 pph and include 1.68 pph halloysite clay ("Dow Clay" provided by Plainsman Clays Limited) as a ten weight-percent concentrate in polystyrene (STYRON™ 680, STYRON is a trademark of The Dow Chemical Company) with the additives added at the extruder feed throat. Example 2 has a monomodal cell size distribution.

Table 3 presents characteristics of Comp Ex F and Ex 2. Ex 2 illustrates a process and extruded foam article of the present invention. Comp Ex F contrasts Example 2 by illustrating poor quality foam (large number of cell defects) results in an absence of clay.

**Table 3**

| **Sample** | **Water soluble Na^{a}** | **Water soluble Ca^{a}** | **Water soluble Mg^{a}** | **Density w/skin^{b}** | **Density w/o skin^{c}** | **Ave 3-directional cell size** | **Number of Blow-holes** |
|---|---|---|---|---|---|---|---|
| | (ppm) | (ppm) | (ppm) | (kg/m³) | (kg/m³) | (mm) | |
| Ex 2 *(halloysite)* | <10 | 25 | <10 | 35.6 | 31.4 | 0.10 | 2 |
| Comp Ex F *(No Clay)* | <10 | <10 | <10 | 36.5 | 32.7 | 0.11 | 24 |

| | | | | | | | |
|---|---|---|---|---|---|---|---|
| ^{a, b, c} [Footnotes are the same as in Table 2] | | | | | | | |

## Claims

1. An extruded polystyrene foam article comprising:
a. a polystyrene homopolymer matrix that defines cells;
b. halloysite clay particles dispersed in the polystyrene matrix at a concentration of greater than 0.01 weight-percent and five weight percent or less based on polystyrene matrix weight;
wherein the polystyrene foam has a monomodal cell size distribution and contains 50 weight-parts or less total cations other than barium cations based on one million weight-parts of total polymer in the polystyrene matrix.

2. The extruded polystyrene foam of Claim 1, further **characterized by** less than four percent by weight of the halloysite clay has a particle size greater than 74 micrometers.

3. The extruded polystyrene foam of Claim 1, further **characterized by** the halloysite clay containing an organic surface coating.

4. The extruded polystyrene foam article of Claim 1, further **characterized by** having an average three-directional cell size of at least 0.15 millimeters and a density of 40 kilograms per cubic meter or less.

5. The extruded polystyrene foam article of Claim 1, further **characterized by** having a density of 38 kilograms per cubic meter or less.

## Patentansprüche

1. Ein extrudierter Polystyrolschaumstoff-Artikel, der Folgendes beinhaltet:
a. eine Polystyrol-Homopolymer-Matrix, die Zellen definiert;
b. Halloysit-Tonpartikel, die in der Polystyrolmatrix in einer Konzentration von mehr als 0,01 Gewichtsprozent und fünf Gewichtsprozent oder weniger, bezogen auf das Gewicht der Polystyrolmatrix, dispergiert sind;
wobei der Polystyrolschaum eine monomodale Zellgrößenverteilung aufweist und 50 Gewichtsteile oder weniger Gesamtkationen, die nicht Bariumkationen sind, enthält, bezogen auf eine Million Gewichtsteile des Gesamtpolymers in der Polystyrolmatrix.

2. Extrudierter Polystyrolschaumstoff-Artikel gemäß Anspruch 1, ferner **dadurch gekennzeichnet, dass** weniger als vier Gewichtsprozent des Halloysit-Tons eine Partikelgröße von mehr als 74 Mikrometer aufweisen.

3. Extrudierter Polystyrolschaumstoff-Artikel gemäß Anspruch 1, ferner **dadurch gekennzeichnet, dass** der Halloysit-Ton eine organische Oberflächenbeschichtung enthält.

4. Extrudierter Polystyrolschaumstoff-Artikel gemäß Anspruch 1, ferner **dadurch gekennzeichnet, dass** er eine durchschnittliche dreidirektionale Zellgröße von mindestens 0,15 Millimeter und eine Dichte von 40 Kilogramm pro Kubikmeter oder weniger aufweist.

5. Extrudierter Polystyrolschaumstoff-Artikel gemäß Anspruch 1, ferner **dadurch gekennzeichnet, dass** er eine Dichte von 38 Kilogramm pro Kubikmeter oder weniger aufweist.

## Revendications

1. Un article en mousse de polystyrène extrudé comprenant :
a. une matrice d'homopolymère de polystyrène qui définit des cellules ;
b. des particules d'argile halloysite dispersées dans la matrice de polystyrène à une concentration de plus de 0,01 pour cent en poids et de cinq pour cent en poids ou moins rapporté au poids de la matrice de polystyrène ;
dans lequel la mousse de polystyrène présente une distribution de tailles de cellules monomodale et contient 50 parties en poids ou moins de cations totaux autres que des cations baryum rapporté à un million de parties en poids de polymère total dans la matrice de polystyrène.

2. La mousse de polystyrène extrudé de la revendication 1, **caractérisée** en sus par le fait que moins de quatre pour cent en poids de l'argile halloysite présente une taille de particule supérieure à 74 micromètres.

3. La mousse de polystyrène extrudé de la revendication 1, **caractérisée** en sus par le fait que l'argile halloysite contient un revêtement de surface organique.

4. L'article en mousse de polystyrène extrudé de la revendication 1, caractérisé en sus par le fait d'avoir une taille de cellule tridimensionnelle moyenne d'au moins 0,15 millimètre et une masse volumique de 40 kilogrammes par mètre cube ou moins.

5. L'article en mousse de polystyrène extrudé de la revendication 1, caractérisé en sus par le fait d'avoir une masse volumique de 38 kilogrammes par mètre cube ou moins.
